# EUROPÄISCHE PATENTSCHRIFT

(11) **EP 0 383 883 B1**
(45) Veröffentlichungstag und Bekanntmachung des Hinweises auf die Patenterteilung: **27.10.1993**
(21) Anmeldenummer: 89909152.4
(22) Anmeldetag: 16.08.1989
(51) Int. Cl.: B60H 1/32

(54) **VERFAHREN UND SCHALTUNGSANORDNUNG ZUR STEUERUNG EINES VON EINER BRENNKRAFTMASCHINE ANGETRIEBENEN VERBRAUCHERS**
PROCESS AND CIRCUIT FOR CONTROLLING A CONSUMER DRIVEN BY AN INTERNAL COMBUSTION ENGINE
PROCEDE ET CIRCUIT DE COMMANDE D'UN CONSOMMATEUR ENTRAINE PAR UN MOTEUR A COMBUSTION INTERNE

(30) Priorität: 01.09.1988 DE 3829635
(43) Veröffentlichungstag der Anmeldung: 29.08.1990
(73) Patentinhaber: ROBERT BOSCH GMBH, 70442 Stuttgart (DE)
(72) Erfinder: GRAS, Jürgenian, D-7120 Bietigheim-Bissingen (DE); TJOA, Jan, Tian, D-7140 Ludwigsburg (DE)
(86) Internationale Anmeldenummer: DE8900531
(87) Internationale Veröffentlichungsnummer: WO9002664

(56) Entgegenhaltungen:
- EP-A- 0 127 001
- EP-A- 0 199 536
- EP-A- 0 281 152
- GB-A- 2 095 838
- GB-A- 2 203 265
- US-A- 4 703 627
- US-A- 4 723 416
- Patent Abstracts of Japan, Band 11, Nr. 175 (M-596)(2622) 5. Juni 1987

## Beschreibung

### Stand der Technik

Die Erfindung betrifft ein Verfahren zur Steuerung eines von einer Brennkraftmaschine angetriebenen Verbrauchers gemäß Oberbegriff des Anspruchs 1.

Die Erfindung betrifft außerdem ein Steuergerät zur Ausführung eines Verfahrens der genannten Art nach der Gattung des Anspruchs 8 darüberhinaus die VerWendung eines im Hochdruckbereich eines Kompressors einer Klimaanlage eines Kraftfahrzeugs angeordneten Drucksensors zur Steuerung des Kompressors gemäß Anspruch 15 und schließlich die Verwendung eines Steuergeräts zur Steuerung zur Funktionen einer Brennkraftmaschine zur Ansteuerung eines von der Brennkraftmaschine angetriebenen Verbrauchers nach Anspruch 16.

Es ist ein Verfahren zur Steuerung eines Kompressors einer Klimaanlage bekannt, bei dem die Leistungsabgabe der Brennkraftmaschine beispielsweise durch Hochregelung der Drehzahl bzw. durch Erhöhung der der Brennkraftmaschine zugeführten Luftmenge erhöht wird, bevor mit einer vorgegebenen Verzögerung der Kompressor in Betrieb genommen wird. Bei diesem Verfahren wird die Leistungsabgabe jeweils um einen vorgegebenen, festen Wert erhöht. Die Verzögerung vor dem Einschalten des Kompressors ist deshalb nötig, weil die Leistungsabgabe der Brennkraftmaschine nicht immer schlagartig erhöht werden kann. Es ist auch bekannt, bei einem derartigen Verfahren ein Steuergerät zur Steuerung der Funktionen einer Brennkraftmaschine heranzuziehen. Das heißt also, der Kompressor der Klimaanlage wird nicht mehr unmittelbar von einem beispielsweise im Innenraum des Fahrzeugs angebrachten Thermostat angesteuert. Vielmehr wird das Signal des Thermostaten dem Steuergerät zugeleitet, welches aufgrund dieses Signals zunächst die Leistungsabgabe der Brennkraftmaschine erhöht und dann verzögert der Kompressor einschaltet. Die Erhöhung der Leistungsab gabe der Brennkraftmaschine dient dazu, die Drehzahl der Brennkraftmaschine auch beim Einschalten des Kompressors möglichst konstant zu halten.

Ein derartiges Verfahren ist beispielsweise aus der EP-A 281 152 oder der EP-A 127 001 bekannt. Die Erhöhung der Leistungsabgabe der Brennkraftmaschine erfolgt in beiden Fällen abhängig vom Schaltzustand eines die Klimaanlage einschaltenden Schalters. Die Erhöhung der Leistungsabgabe erfolgt durch einen Betrag. Die Zuschaltung des Kompressors erfolgt im Falle der EP-A 281 152 dann, wenn die Leistung der Brennkraftmaschine eine vorgegebene Schwelle erreicht hat, während die Inbetriebnahme des Kompressors im Falle der EP-A 127 001 dann erfolgt, wenn eine vorgegebene Zeitdauer abgelaufen ist.

Nachteil dieses Verfahrens ist es, daß die Belastung der Brennkraftmaschine beim Einschalten des Kompressors nicht konstant ist. Beispielsweise wird die Brennkraftmaschine durch das Einschalten des Kompressors bei hohen Außentemperaturen mehr belastet als bei niedrigen Temperaturen. Die Belastung der Brennkraftmaschine beim Einschalten des Kompressors ist dann höher, wenn in dessen Hochdruckbereich ein hoher Druck herrscht. Dies ist der Fall, wenn der Kompressor aufgrund hoher Außentemperaturen häufig eingeschaltet wird.

Bei dem bekannten Verfahren ergeben sich also bei bestimmten Voraussetzungen noch starke Leistungsschwankungen der Brennkraftmaschine, wenn der Kompressor eingeschaltet wird.

### Vorteile der Erfindung

Das erfindungsgemäße Verfahren mit den in Anspruch 1 aufgeführten Merkmalen hat dem gegenüber den Vorteil, daß bei der Ansteuerung des Kompressors die Leistungsabgabe der Brennkraftmaschine immer optimal eingestellt ist. Das hat zur Folge, daß das Einschalten der Klimaanlage praktisch ruckfrei erfolgt.

Besonders bevorzugt wird ein Verfahren, bei dem zur Bestimmung der zu erwartenden Belastung der Brennkraftmaschine der Druck im Hochdruckbereich des Kompressors gemessen wird. Die beim Anlaufen des Kompressors erforderliche Kraft ist um so höher, je höher der Druck im Hochdruckbereich ist. Aufgrund der Druckmessung läßt sich die bei Inbetriebnahme des Kompressors auftretende Belastung der Brennkraftmaschine also sehr genau vorausbestimmen und dementsprechend die Leistungsabgabe der Brennkraftmaschine entsprechend anpassen.

Bevorzugt wird überdies ein Verfahren, bei dem der Verbraucher nach Ablauf einer vorgebbaren Verzögerungszeit in Betrieb genommen wird. Dadurch bleibt ausreichend Zeit, die Leistungsabgabe der Brennkraftmaschine entsprechend der durch Zuschaltung des Verbrauchers erwarteten Belastung hochzuregeln.

Bei einem weiteren bevorzugten Verfahren wird die Temperatur der Brennkraftmaschine ermittelt und die Verzögerungszeit in Abhängigkeit dieser Temperatur eingestellt. Dadurch ist es beispielsweise möglich, bei niedrigen Motortemperaturen die Einschaltung des Verbrauchers hinauszuzögern, bis eine höhere Leitstungsabgabe der Brennkraftmaschine eingestellt ist.

Bei einem weiteren bevorzugten Verfahren wird die Temperatur der Brennkraftmaschine ermittelt und in Abhängigkeit davon die Leistungsabgabe der Brennkraftmaschine erhöht. Dadurch kann bei allen Motortemperaturen die Leistungsabgabe optimal eingestellt werden, um bei allen Betriebszuständen der Brennkraftmaschine ein ruckfreies Einschalten der Klimaanlage zu ermöglichen.

Durch die Temperaturermittlung ist es beispielsweise auch möglich, bei besonders hohen Motortemperaturen die Zuschaltung des Kompressors der Klimaanlage zu unterbinden, damit eine weitere Belastung des Motors unterbleibt.

Bevorzugt ist überdies ein Verfahren, bei dem der momentane Lastzustand der Brennkraftmaschine erfaßt wird und bei dem bei Überschreiten eines vorgebbaren oberen Lastwerts die Inbetriebnahme des Kompressors unterbleibt. Wenn beispielsweise also die volle Leistung der Brennkraftmaschine für einen Beschleunigungsvorgang gebraucht wird, wird eine Leistungsreduktion durch Zuschalten des Kompressors vermieden.

Die erfindungsgemäße Steuerschaltung zur Durchführung eines Verfahrens der genannten Art mit den in Anspruch 9 genannten Merkmalen hat den Vorteil, daß mittels eines Sensors der im Hochdruckbereich eines Kompressors herrschende Druck erfaßt wird, wodurch die bei Einschalten des Kompressors entstehende Belastung der Brennkraftmaschine sehr genau vorhersehbar ist. Daher kann mittels einer geeigneten Steuereinrichtung die Leistungsabgabe der Brennkraftmaschine in Abhängigkeit von dem gemessenen Druck so erhöht werden, daß die Zuschaltung des Kompressors praktisch ruckfrei erfolgen kann.

Bei einer bevorzugten Steuerschaltung ist ein Verzögerungsorgan vorgesehen, durch welches der Verbraucher bzw. der Kompressor erst nach einer vorgebbaren Verzögerungszeit betätigbar ist. Beispielsweise kann nach dem Starten der Brennkraftmaschine eine Verzögerungszeit von 10-20 Sekunden gewählt werden, in der der Kompressor nicht in Betrieb genommen wird. Dadurch wird die Brennkraftmaschine in der Zeit, in der alle Motorsteuerungsvorgänge einschwingen, nicht zusätzlich belastet.

Bei einer weiteren bevorzugten Steuerschaltung ist eine Überwachungsschaltung vorgesehen, mittels der die Funktonsfähigkeit einzelner Schaltelemente bzw. Schaltelementgruppen überprüft wird. Wenn ein Fehler vorliegt, wird die Inbetriebnahme des Kompressors verhindert, so daß eine Überlastung der Brennkraftmaschine ausgeschlossen ist.

Durch die in den Unteransprüchen aufgeführten Maßnahmen sind vorteilhafte Weiterbildungen und Verbesserungen des Steuergeräts möglich.

### Zeichnung

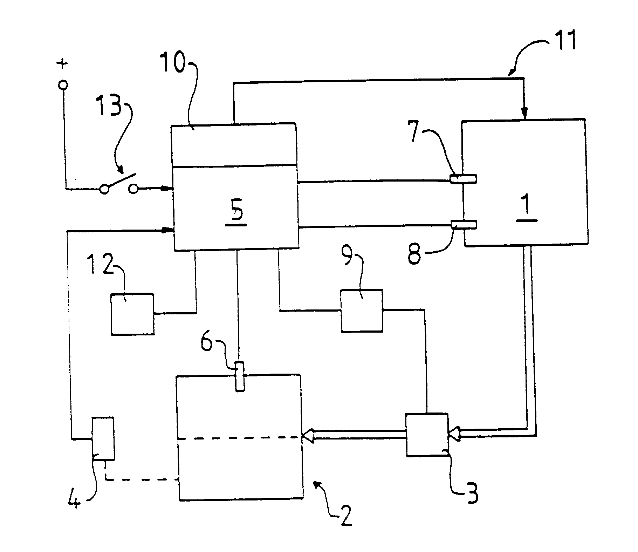

Ein Ausführungsbeispiel der Erfindung ist in der Zeichnung dargestellt, die in einem Blockschaltbild eine Prinzipskizze einer erfindungsgemäßen Steuerschaltung wiedergibt.

### Beschreibung des Ausführungsbeispiels

In der Figur ist eine Steuerschaltung zur Durchführung eines Verfahrens zur Steuerung eines von einer Brennkraftmaschine angetriebenen Verbrauchers dargestellt. Als Verbraucher wurde hier beispielshaft der Verdichter bzw. der Kompressor einer Klimaanlage eines Kraftfahrzeugs gewählt.

Die Steuerschaltung weist ein Steuergerät auf, das der Steuerung der Funktionen der Brennkraftmaschine dient. Derartige Steuergeräte sind bekannt; auf Ihre Funktion braucht daher hier nicht genauer eingegangen zu werden.

Die Figur zeigt ein Blockschaltbild zur Darstellung der Funktion einer von einer Brennkraftmaschine 1 eines Fahrzeugs angetriebenen Klimaanlage mit einem Kompressor 2. Zwischen der Brennkraftmaschine 1 und dem Kompressor 2 ist ein als steuerbare Kupplung 3 ausgebildetes Schaltorgan vorgesehen. Vorzugsweise wird eine elektromagnetische Kupplung gewählt.

Der Kompressor der Klimaanlage kann einerseits bei zu hohen Temperaturen im Innenraum des Kraftfahrzeugs aber auch bei einer zu hohen Luftfeuchtigkeit im Inneren des Fahrzeugs eingeschaltet werden. Eine temperaturabhängige Einschaltung erfolgt beispielsweise über einen Thermostaten im Inneren des Fahrzeugs. Bei einfachen Klimaanlagen wird der Kompressor unmittelbar von dem Thermostaten der Klimaanlage eingeschaltet. Dazu ist eine Verbindung zwischen Thermostat und Kompressor nötig, die in der Figur gestrichelt dargestellt ist.

Aus der Figur ist ersichtlich, daß hier keine direkte Verbindung zwischen dem Thermostaten 4 und dem Kompressor 2 besteht. Statt dessen wird das Ausgangssignal des Thermostaten einem Steuergerät 5 zugeführt.

Weitere Informationen erhält das Steuergerät 5 von verschiedenen Sensoren. Beispielsweise ist auf der Hochdruckseite des Kompressors ein Drucksensor 6 vorgesehen, der den dort herrschenden Druck erfaßt und entsprechende Signale an das Steuergerät 5 weiterleitet. Der Drucksensor kann beispielsweise so ausgelegt sein, daß er eine Spannung abgibt, die proportional ist zum Druck der Klimaanlagen-Kühlflüssigkeit. Dabei kann sich beispielsweise die Ausgangsspannung am Drucksensor 6 von 0-5V ändern, wenn der Druck im Hochdruckbereich des Kompressors von 0-30 bar steigt.

Über einen Temperatursensor 7 wird die Temperatur der Brennkraftmaschine 1 erfaßt. Beispielsweise kann die Temperatur der Kühlflüssigkeit oder die des Öls der Brennkraftmaschine gemessen werden. Der Temperatursensor 7 ist über eine Leitung mit dem Steuergerät 5 verbunden.

Über einen weiteren, sogenannten Lastsensor 8 kann der Lastzustand der Brennkraftmaschine erfaßt werden. Dabei kann beispielsweise die Stellung der Drosselklappe oder die eines mit dem Gaspedal verbundenen Weggebers ermittelt werden. Auch das Ausgangssignal dieses Sensors wird dem Steuergerät 5 zugeleitet.

Außerdem ist eine Verzögerungsschaltung 9 vorgesehen, die zwischen das Steuergerät 5 und die Kupplung 3 geschaltet ist.

Das Steuergerät weist überdies eine Steuereinrichtung 10 auf, die über eine Seitung 11 mit der Brennkraftmaschine verbunden ist.

Es ist auch eine Überwachungsschaltung 12 vorgesehen, die die Funktion von einzelnen Schaltelementen bzw. Schaltelementgruppen überwacht. Dazu ist die Überwachungsschaltung beispielsweise mit dem Thermostaten 4, dem Kompressor 2, dem Drucksensor 6, der Verzögerungsschaltung 9, dem Lastsensor 8, dem Temperatursensor 7, der Steuereinrichtung 10 und auch mit einzelnen Schalteinheiten des Steuergeräts 5 verbunden. Die dazu notwendigen Leitungen sind zur Erhöhung der Übersichtlichkeit der Figur hier nicht eingezeichnet.

Schließlich ist ein als Schließer ausgelegter Schalter 13 vorgesehen, der mit einer geeigneten Spannungsquelle verbunden ist. Über diesen Schalter kann der Kompressor unabhängig vom Thermostaten bzw. von der Temperatur im Innenraum des Kraftfahrzeugs eingeschaltet werden, z.B. bei zu hoher Luftfeuchtigkeit im Fahrzeug. Statt des mechanischen Schalters gemäß der Figur kann auch ein elektronischer Schalter vorgesehen werden.

Üblicherweise sind in einem Steuergerät zur Steuerung einer Brennkraftmaschine alle erforderlich hier beschriebenen Signale vorhanden, z.B. Motortemperatur und Lastzustand der Brennkraftmaschine. Nur das Drucksensorsignal muß zusätzlich eingeführt werden. Auch der Schalter 13 und die Verzögerungsschaltung 9 können in das Steuergerät 5 integriert werden, das über einen Schalter, z.B. ein elektirsches Relais den Kompressor der Klimaanlage steuert.

Im folgenden wird das Verfahren zur Steuerung eines von einer Brennkraftmaschine angetriebenen Verbrauchers und damit die Funktion der in der Figur dargestellten Schaltung näher erläutert:
Sobald die Temperatur im Innenraum eines Kraftfahrzeugs einen vorgebbaren Grenzwert übersteigt, gibt der Thermostat 4 ein entsprechendes Ausgangssignal an das Steuergerät 5 ab. Der Kompressor 2 wird nicht unmittelbar aufgrund dieses Signals eingeschaltet. Vielmehr wird zunächst der Betriebszustand des Kompressors 2, allgemein gesagt also der Betriebszustand des zuzuschaltenden Verbrauchers, ermittelt. Dies geschieht mit Hilfe des Drucksensors 6, der den im Hochdruckbereich des Kompressors herrschenden Druck erfaßt und ein entsprechendes Ausgangssignal an das Steuergerät 5 abgibt. Der Druck und damit die zu erwartende Belastung der Brennkraftmaschine wird zu bestimmten diskreten Zeitpunkt, vorzugsweise aber kontinuierlich gemessen.

Um zu verhindern, daß beim Einschalten des Kompressors 2 die Leistung der Brennkraftmaschine 1 spührbar reduziert wird, findet zunächst eine Erhöhung der Leistungsabgabe der Brennkraftmaschine statt. Dies wird durch ein entsprechendes Signal der Steuereinrichtung 10 über die Leitung 11 erreicht. Dabei kommt es hier nicht darauf an, wie die abgegebene Leistung der Brennkraftmaschine erhöht wird. Es ist also beispielsweise möglich, die der Brennkraftmaschine zugeführte Luftmenge mit Hilfe der Steuereinrichtung 10 zu erhöhen. Auch ist es möglich, den Zündwinkel entsprechend zu verstellen, um die abgegebene Leistung zu erhöhen. Beispielsweise kann auch das der Brennkraftmaschine zugeführte Kraftstoff/Luft-Gemisch angefettet werden. Diese letzte Lösung ist insbesondere für Magermotoren geeignet.

Erst nachdem die abgegebene Leistung der Brennkraftmaschine erhöht wurde, wird der Kompressor 2 eingeshaltet. Um eine Leistungserhöhung der Brennkraftmaschine sicherzustellen, wird der Kompressor also erst nach einer gewissen Verzögerungszeit zugeschaltet. Die Verzögerungszeit kann von dem Steuergerät 5 variiert werden. Die Verzögerung wird von der Verzögerungsschaltung 9 sichergestellt.

Nach Ablauf der Verzögerungszeit wird die zwischen Brennkraftmaschine 1 und Kompressor 2 vorgesehene Kupplung 3 aktiviert, so daß eine Kraftübertragung von der Brennkraftmaschine auf den Kompressor erfolgt.

Aus dem oben Gesagten ergibt sich, daß beispielsweise die der Brennkraftmaschine zugeführte Luftmenge erhöht wird, bevor der Kompressor zugeschaltet wird. Dadurch ist es möglich, den Kompressor praktisch ruckfrei einzuschalten. Da mit Hilfe des Drucksensors 6 der Druck auf der Ausgangsseite des Kompressors 2 ermittelt wurde, kann die Leistungserhöhung an den momentanen Betriebszustand des Kompressors angepaßt werden. Herrscht also auf der Ausgangsseite des Kompressors ein hoher Druck, ist also die Belastung der Brennkraftmaschine beim Einschalten des Kompressors groß, wird vor Inbetriebnahme des Kompressors die Leistung der Brennkraftmaschine mehr erhöht, als wenn der Druck auf der Hochdruckseite des Kompressors niedrig ist.

Der Grad der Leistungserhöhung kann an verschiedene Gegebenheiten angepaßt werden. Beispielsweise kann mittels des Temperatursensors 7 die Temperatur der Brennkraftmaschine 1 erfaßt werden. Wenn diese noch relativ niedrig ist, kann vor Einschalten des Kompressors 2 mit Hilfe der Steuereinrichtung 10 eine größere Leistungserhöhung der Brennkraftmaschine vorgegeben werden. Auch ist es möglich, die Temperatur der Brennkraftmaschine mit einem Grenzwert zu vergleichen und die Inbetriebnahme des Kompressors bei Überschreiten eines oberen Grenzwertes ganz zu unterbinden. Dadurch wird vermieden, daß die Brennkraftmaschine durch Zuschalten des Kompressors überlastet wird.

Mittels eines geeigneten Sensors 8 kann auch der momentane Lastzustand der Brennkraftmaschine 1 erfaßt werden. Bei Überschreiten eines vorgebbaren oberen Lastwerts, beispielsweise bei Vollast der Brennkraftmaschine, kann das Einschalten des Kompressors 2 verhindert werden, um eine Überlastung der Brennkraftmaschine auszuschließen.

Auch können die Informationen verschiedener Sensoren kombiniert werden. Beispielsweise kann die Zuschaltung des Kompressors 2 auch dann verhindert werden, wenn bei einer bestimmten Last der Brennkraftmaschine ein vorgebbarer Druckgrenzwert im Hochdruckbereich des Kompressors überschritten wird.

Die Verzögerungsschaltung 9 kann so ausgelegt werden, daß grundsätzlich für eine vorgegebene Zeit von beispielsweise 10-20 Sekunden nach dem Starten der Brennkraftmaschine 1 eine Aktivierung des Kompressors 2 über die Kupplung 3 unterbleibt. Dadurch wird dem Steuergerät 5 genug Zeit gelassen, alle Funktionen der Brennkraftmaschine auf ihren optimalen Wert einzuregeln. Erst nach dem Einschwingen der Motorsteuerungsvorgänge kann dann der Kompressor erstmalig zugeschaltet werden.

Die in der Figur dargestellte Überwachungsschaltung 12 der Steuerschaltung dient der Funktionssicherung. Sie stellt fest, wenn einzelne Elemente der Schaltung, also etwa Sensoren oder Subsysteme des Steuergeräts 5 fehlerhaft sind. Sobald ein Defekt festgestellt wird, stellt das Steuergerät 5 sicher, daß nicht zwingend notwendige Verbraucher, wie der Kompressor einer Klimaanlage, in Betrieb gesetzt werden. Dadurch wird eine unnötige Belastung der Brennkraftmaschine 1 in einem Störungsfall vermieden. Die Überwachungsschaltung kann auch in das Steuergerät 5 integriert werden.

Wenn die Luftfeuchtigkeit im Innenraum eines Kraftfahrzeugs zu hoch ist, kann die Klimaanlage durch den von dem Thermostaten 4 unabhängigen Schalter 13 eingeschaltet werden. Durch diesen Schalter, der einerseits an einer Spannungsquelle liegt, und der andererseits mit dem Steuergerät 5 verbunden ist, wird ein Befehl zur Einschaltung des Kompressors 2 der Klimaanlage abgegeben. Dieses Einschaltsignal ist vergleichbar mit dem, das der Thermostat 4 bei zu hoher Temperatur im Innenraum des Fahrzeugs abgibt. Die Funktion der Steuerschaltung ist gleich, unabhängig davon, ob die Klimaanlage bei zu hoher Temperatur oder bei zu hoher Luftfeuchtigkeit eingeschaltet wird. Das heißt also, vor der Inbetriebnahme des Kompressors 2 wird die Leistungsabgabe der Brennkraftmaschine 1 in Abhängigkeit von der durch den Betrieb des Kompressors zu erwartenden Belastung erhöht. Auch wird in diesem Fall der Kompressor durch die Verzögerungsschaltung 9 erst dann eingeschaltet, wenn die erhöhte Leistungsabgebe der Brennkraftmaschine 1 sichergestellt ist. Die oben beschriebenen Funktionen der Steuerschaltung sind im übrigen identisch, so daß hier eine genaue Beschreibung derselben entfallen kann.

Auf jeden Fall wird sichergestellt, daß vor Einschaltung des Verbrauchers bzw. des Kompressors 2 die Leistung der Brennkraftmaschine 1 in Abhängigkeit von der zu erwartenden Belastung durch den Verbraucher erhöht wird. Auf diese Weise ergibt sich ein ruckfreies Einschalten des Verbrauchers in praktisch allen Drehzahlbereichen der Brennkraftmaschine. Bei Leerlauf der Brennkraftmaschine wird ein Abfall der Drehzahl praktisch ausgeschlossen. Überdies wird durch die erfindungsgemäße Steuerschaltung bzw. durch das hier beschriebene Verfahren ein Schutz der Brennkraftmaschine 1 vor Überlastung erreicht, weil Betriebszustände wie Temperatur oder Last der Brennkraftmaschine in den Steuervorgang integriert werden.

Aus der Prinzipdarstellung der Steuerschaltung und aus der Beschreibung des Verfahrens zur Steuerung eines von einer Brennkraftmaschine angetriebenen Verbrauchers ist ersichtlich, daß durch die Verwendung eines im Hochdruckbereich eines Kompressors einer Klimaanlage eines Kraftfahrzeuges angeordneten Drucksensors eine optimale Steuerung des Kompressors möglich ist, indem die Leistungsabgabe der Brennkraftmaschine des Kraftfahrzeugs vor Inbetriebnahme des Kompressors in Abhängigkeit von der entstehenden Belastung der Brennkraftmaschine erhöht wird.

Die Ausgangssignale eines derartigen Sensors werden einem Steuergerät zur Steuerung der Funktionen einer Brennkraftmaschine zugeleitet, die die oben beschriebenen Eigenschaften aufweist. Das die Ausgangssignale des Drucksensors auswertenden Steuergerät 5 kann so ausgelegt sein, daß sowohl bei Überschreiten eines oberen Druck-Grenzwerts sowie bei Unterschreiten eines vorgebbaren unteren Druck-Grenzwerts die Einschaltung des Kompressors der Klimaanlage unterbleibt. Druckschalter und/oder Drucksensoren, die sonst die Funktionssicherung einer Klimaanlage erforderlich sind, können also entfallen.

Zur Durchführung des anhand der Figur beschriebenen Verfahrens läßt sich ein Steuergerät zur Steuerung der Funktionen einer Brennkraftmaschine zur Ansteuerung eines von der Brennkraftmaschine angetriebenen Verbrauchers, insbesondere eines Kompressors einer Klimaanlage eines Kraftfahrzeugs heranziehen, wobei das Steuergerät einen die Belastung der Brennkraftmaschine durch den Kompressor vor dessen Inbetriebnahme erfassenden Sensor sowie eine die Leistungsabgabe der Brennkraftmaschirte in Abhängigkeit von der durch den Kompressor auftretenden Belastung der Brennkraftmaschine erhöhende Steuereinheit aufweist. Die Funktion eines derartigen Steuergeräts wird bei einer derartigen Verwendung wesentlich verbessert. Insbesondere läßt sich ein ruckfreies Einschalten eines Verbrauchers bzw. Kompressors einer Klimaanlage erreichen. überdies lassen sich, wie oben anhand der Beschreibung der Figur dargelegt, zusätzliche Sicherheitsfunktionen vorsehen, die den Betrieb einer Brennkraftmaschine im Zusammenhang mit der Ansteuerung eines Verbrauchers verbessern. Störungsfälle werden sicher erkannt und zusätzliche Belastungen der Brennkraftmaschine z.B. durch Verbraucher wie Kompressoren von Klimaanlagen in Störungsfällen ausgeschlossen.

## Patentansprüche

1. Verfahren zur Steuerung eines von einer Brennkraftmaschine angetriebenen Kompressors einer Klimaanlage eines Kraftfahrzeugs mit folgenden Schritten:
- Vor Inbetriebnahme des Kompressors wird die Leistungsabgabe der Brennkraftmaschine um einen vorgegebenen Wert erhöht,
- nach einer vorgegebenen Verzögerung wird der Kompressor eingeschaltet,
- wobei vor Inbetriebnahme des Kompressors die durch den Betrieb des Kompressors entstehende Belastung der Brennkraftmaschine ermittelt wird,
- und die abgegebene Leistung der Brennkraftmaschine in Äbhängigkeit von der ermittelten, zu erwartenden Belastung erhöht und dann der Kompressor in Betrieb genommen wird,
dadurch gekennzeichnet, daß
- vor Inbetriebnahme des Kompressors die durch den Betrieb des Kompressors entstehende Belastung der Brennkraftmaschine kontinuierlich ermittelt wird.

2. Verfahren nach Anspruch 1, **dadurch gekennzeichnet,** daß zur Bestimmung der zu erwartenden Belastung der Brennkraftmaschine der Druck im Hochdruckbereich des Kompressors gemessen wird.

3. Verfahren nach einem der Ansprüche 1-2, **dadurch gekennzeichnet,** daß der Verbraucher nach Ablauf einer vorgebbaren Verzögerungszeit in Betrieb genommen wird.

4. Verfahren nach Anspruch 3, **dadurch gekennzeichnet,** daß die Temperatur der Brennkraftmaschine ermittelt und daß die Verzögerungszeit in Abhängigkeit von der Temperatur gewählt wird.

5. Verfahren nach Anspruch 1, **dadurch gekennzeichnet,** daß aie Temperatur der Brennkraftraschine ermittelt und daß die Leistungsabgabe der Brennkraftmaschine auch in Abhängigkeit von der Temperatur erhöht wird.

6. Verfahren nach Anspruch 1, **dadurch gekennzeichnet,** daß die Temperatur der Brennkraftmaschine ermittelt und bei Überschreiten eines oberen Grenzwerts die Inbetriebnahme des Kompressors unterbleibt.

7. Verfahren nach Anspruch 1, **dadurch gekennzeichnet,** daß der momentane Lastzustand der Brennkraftmaschine erfaßt und daß bei Überschreiten eines vorgebbaren oberen Lastwerts die Inbetriebnahme des Kompressors unterbleibt.

8. Steuerschaltung zur Durchführung eines Verfahrens nach einem der Ansprüche 1 bis 7, **gekennzeichnet durch**
- einen den im Hochdruckbereich eines Kompressors (2) herrschenden Druck erfassenden Drucksensor (6),
- eine Steuereinrichtung (10), die die Leistungsabgabe der Brennkraftmaschine (1) in Abhängigkeit von dem Ausgangssignal des Drucksensors (6) erhöht, und
- ein Schaltorgan (3), welches den Kompressor (2) in Betrieb setzt.

9. Steuerschaltung nach Anspruch 8, **dadurch gekennzeichnet,** daß das Schaltorgan als steuerbare Kupplung (3), vorzugsweise als elektromagnetische Kupplung ausgebildet ist.

10. Steuerschaltung nach Anspruch 8, **gekennzeichnet durch** eine Verzögerungsschaltung (9), durch welche das Schaltorgan (3) erst nach einer vorgebbaren Verzögerungszeit betätigbar ist.

11. Steuerschaltung nach Anspruch 10, **dadurch gekennzeichnet,** daß die von der Verzögerungsschaltung (9) vorgebbare Verzögerungszeit in Abhängigkeit von der Temperatur der Brennkraftmaschine (1) variabel ist.

12. Steuerschaltung nach Anspruch 8, **gekennzeichnet durch** einen die Temperatur der Brennkraftmaschine (1) erfassenden Sensor (7).

13. Steuerschaltung nach Anspruch 8, **gekennzeichnet durch** eine den Lastwert der Brennkraftmaschine (1) erfassende Einrichtung (8).

14. Steuerschaltung nach Anspruch 8, **gekennzeichnet durch** eine Überwachungsschaltung (12) zur Überwachung der Funktionsfähigkeit von einzelnen Schaltelementen und/oder Schaltelementgruppen, wobei die Überwachungsschaltung im Fehlerfall die Inbetriebnahme des Kompressors (2) verhindert.

15. Verwendung eines im Hochdruckbereich eines Kompressors einer Klimaanlage eines Kraftfahrzeugs angeordneten Drucksensors zur Steuerung des Kompressors und zur Anpassung der Leistungsabgabe der Brennkraftmaschine des Kraftfahrzeugs vor Inbetriebnahme des Kompressors,
- wobei durch den Drucksensor kontinuierlich ein Maß für die zu erwartende Belastung bei Inbetriebnahme des Kompressors ermittelt wird und die Leistungsabgabe der Brennkraftmaschine vor Inbetriebnahme des Kompressors in Abhängigkeit der ermittelten, zu erwartenden Belastung angepaßt wird.

16. Verwendung nach Anspruch 16, dadurch gekennzeichnet, daß ein Steuergerät zur Steuerung der Funktion einer Brennkraftmaschine zur Steuerung eines von der Brennkraftmaschine angetriebenen Kompressors einer Klimaanlage eines Kraftfahrzeugs vorgesehen ist, welches mit einem im Hochdruckbereich des Kompressors der Klimaanlage angeordneten Drucksensor verbunden ist und eine die Leistungsabgabe der Brennkraftmaschine in Abhängigkeit des durch den Drucksensor ermittelten, zu erwartenden Belastung der Brennkraftmaschine erhöhende Steuereinheit aufweist.

## Claims

1. Process for controlling a compressor of an air-conditioning system of a motor vehicle driven by an internal-combustion engine, with the following steps:
- before the compressor is put into operation, the power output of the internal-combustion engine is increased by a given amount,
- the compressor is cut in after a predetermined delay,
- the load on the internal-combustion engine, occurring as a result of the operation of the compressor, being determined before the compressor, is put into operation,
- and the power output of the internal-combustion engine being increased as a function of the expected load determined and the compressor then being put into operation,
characterized in that before the compressor is put into operation the load occurring on the internal-combustion engine as a result of the operation of the consumer is determined continuously.

2. Process according to Claim 1, characterized in that, to determine the expected load on the internal-combustion engine, the pressure in the high-pressure region of the compressor is measured.

3. Process according to one of Claims 1-2, characterized in that the consumer is put into operation after the predeterminable delay time has elapsed.

4. Process according to Claim 3, characterized in that the temperature of the internal-combustion engine is determined, and in that the delay time is selected as a function of the temperature.

5. Process according to Claim 1, characterized in that the temperature of the internal-combustion engine is determined, and in that the power output of the internal-combustion engine is also increased as a function of the temperature.

6. Process according to Claim 1, characterized in that the temperature of the internal-combustion engine is determined, and when an upper limit value is exceeded the compressor is prevented from being put into operation.

7. Process according to Claim 1, characterized in that the instantaneous load state of the internal combustion engine is detected, and in that when a predeterminable upper load value is exceeded the compressor is prevented from being put into operation.

8. Control circuit for carrying out a process according to one of Claims 1-7, characterized by
- a pressure sensor (6) detecting the pressure prevailing in the high-pressure region of a compressor (2),
- a control device (10) which increases the power output of the internal-combustion engine (1) as a function of the output signal from the pressure sensor (6), and
- a switch member (3) which puts the compressor (2) into operation.

9. Control circuit according to Claim 8, characterized in that the switch member is designed as a controllable coupling (3), preferably as an electromagnetic coupling.

10. Control circuit according to Claim 8, characterized by a delay circuit (9), by means of which the switch member (3) is actionable only after a predeterminable delay time.

11. Control circuit according to Claim 10, characterized in that the delay time predeterminable by the delay circuit (9) is variable as a function of the temperature of the internal combustion engine (1).

12. Control circuit according to Claim 8, characterized by a sensor (7) detecting the temperature of the internal combustion engine (1).

13. Control circuit according to Claim 8, characterized by a device (8) detecting the load value of the internal-combustion engine.

14. Control circuit according to Claim 8, characterized by a monitoring circuit (12) for monitoring the operating capacity of individual switch elements and/or groups of switch elements, in the event of a malfunction the monitoring circuit preventing the compressor (2) from being put into operation.

15. Use of a pressure sensor, arranged in the high-pressure region of a compressor of an air-conditioning system of a motor vehicle, for controlling the compressor and for adjusting the power output of the internal-combustion engine of the motor vehicle, before the compressor is put into operation,
- a measure of the expected load when the compressor is put into operation being determined continuously by the pressure sensor, and the power output of the internal-combustion engine being adapted as a function of the expected load determined, before the compressor is put into operation.

16. Use according to Claim 16 [sic], characterized in that a control unit is provided for controlling the functioning of an internal-combustion engine to control a compressor of an air-conditioning system of a motor vehicle driven by the internal-combustion engine, which control unit is connected to a pressure sensor arranged in the high-pressure region of the compressor of the air-conditioning system and has a control unit increasing the power output of the internal-combustion engine as a function of the expected load on the internal-combustion engine determined by the pressure sensor.

## Revendications

1. Procédé pour la commande d'un compresseur d'une installation de climatisation d'un véhicule automobile et qui est entraîné par un moteur à combustion interne, procédé comportant les étapes suivantes:
- avant la mise en service du compresseur, la puissance utile du moteur à combustion interne est augmentée d'une valeur prédéfinie,
- après un retard prédéfini, le compresseur est branché,
- tandis qu'avant la mise en service du compresseur, la charge du moteur à combustion interne résultant du fonctionnement du compresseur, est déterminée,
- et la puissance utile du moteur à combustion interne est augmentée en fonction de la charge à attendre ainsi déterminée, et ensuite, le compresseur est mis en service,
procédé caractérisé en ce que :
- avant la mise en service du compresseur, la charge du moteur à combustion interne devant résulter du fonctionnement du compresseur, est déterminée de façon continue.

2. Procédé selon la revendication 1, caractérisé en ce que pour la détermination de la charge à attendre du moteur à combustion interne, la pression est mesurée dans la zone haute pression du compresseur.

3. Procédé selon une des revendications 1 ou 2, caractérisé en ce que le consommateur est mis en service après l'écoulement d'un temps de retard susceptible d'être prédéfini.

4. Procédé selon la revendication 3, caractérisé en ce que la température du moteur à combustion interne est déterminée et en ce que le temps de retard est choisi en fonction de cette température.

5. Procédé selon la revendication 1, caractérisé en ce que la température du moteur à combustion interne est déterminée et en ce que la puissance utile du moteur à combustion interne est également augmentée en fonction de cette température.

6. Procédé selon la revendication 1, caractérisé en ce que la température du moteur à combustion interne est déterminée et lors du dépassement d'une valeur limite supérieure, la mise en service du compresseur n'a pas lieu.

7. Procédé selon la revendication 1, caractérisé en ce que l'état de charge momentané du moteur à combustion interne est détecté et en ce que, lors du dépassement d'une valeur supérieure de la charge susceptible d'être prédéfinie, la mise en service du compresseur n'a pas lieu.

8. Circuit de commande pour la mise en oeuvre d'un procédé selon une des revendications 1 à 7, caractérisé en ce qu'il comporte :
- un capteur de pression (6) détectant la pression régnant dans la zone haute pression d'un compresseur (2),
- un dispositif de commande (10) qui augmente la puissance utile du moteur à combustion interne (1) en fonction du signal de sortie du capteur de pression (6),
- un organe de commutation (3) qui met en service le compresseur (2).

9. Circuit de commande selon la revendication 8, caractérisé en ce que l'organe de commutation est réalisé sous la forme d'un coupleur (3) susceptible d'être commandé, de préférence sous la forme d'un coupleur électromagnétique.

10. Circuit de commande selon la revendication 8, caractérisé en ce qu'il est prévu un circuit de temporisation (9), grâce auquel l'organe de commutation (3) n'est actionné qu'après un temps de retard susceptible d'être prédéfini.

11. Circuit de commande selon la revendication 10, caractérisé en ce que le temps de retard susceptible d'être prédéfini par le circuit de temporisation (9) est variable en fonction de la température du moteur à combustion interne (1).

12. Circuit de commande selon la revendication 8, caractérisé en ce qu'il est prévu un capteur (7) détectant la température du moteur à combustion interne (1).

13. Circuit de commande selon la revendication 8, caractérisé en ce qu'il est prévu un dispositif (8) détectant la valeur de charge du moteur à combustion interne (1).

14. Circuit de commande selon la revendication 8, caractérisé en ce qu'il est prévu un circuit de surveillance (12) pour surveiller l'aptitude au fonctionnement de divers éléments de commutation et/ou de groupes d'éléments de commutation, ce circuit de surveillance empêchant, en cas de défauts, la mise en service du compresseur (2).

15. Utilisation d'un capteur de pression disposé dans la zone haute pression d'un compresseur d'une installation de climatisation d'un véhicule automobile pour commander le compresseur et pour adapter la puissance utile du moteur à combustion interne du véhicule automobile avant la mise en service du compresseur,
- tandis que grâce à ce capteur de pression, une mesure de la charge à attendre lors de la mise en service du compresseur, est déterminée en continu, et la puissance utile du moteur à combustion interne est adaptée avant la mise en service du compresseur en fonction de la charge à attendre ainsi déterminée.

16. Utilisation selon la revendication 15, caractérisée en ce qu'il est prévu un appareil de commande pour commander le fonctionnement d'un moteur à combustion interne et pour commander un compresseur, entraîné par ce moteur à combustion interne, d'une installation de climatisation d'un véhicule automobile, cet appareil de commande étant relié à un capteur de pression disposé dans la zone haute pression du compresseur de l'installation de climatisation, et comportant une unité de commande augmentant la puissance utile du moteur à combustion interne en fonction de la charge à attendre pour le moteur à combustion interne déterminée par le capteur de pression.
